(19) Europäisches Patentamt
European Patent Office
Office européen des brevets

(11) **EP 4 765 299 A1**

(12) **EUROPEAN PATENT APPLICATION**
published in accordance with Art. 153(4) EPC

(43) Date of publication:
**24.06.2026 Bulletin 2026/26**

(21) Application number: 25783073.7

(22) Date of filing: **25.03.2025**

(51) International Patent Classification (IPC):
**H01M 10/0585** (2010.01)     **H01M 4/131** (2010.01)
**H01M 4/525** (2010.01)     **H01M 4/505** (2010.01)
**H01M 10/052** (2010.01)     **H01M 10/04** (2006.01)
**H01M 50/105** (2021.01)     **H01M 10/42** (2006.01)
**H01M 4/02** (2006.01)

(52) Cooperative Patent Classification (CPC):
**H01M 4/02; H01M 4/131; H01M 4/505;
H01M 4/525; H01M 10/04; H01M 10/052;
H01M 10/0585; H01M 10/42; H01M 50/105;
Y02E 60/10**

(86) International application number:
**PCT/KR2025/095093**

(87) International publication number:
**WO 2025/211897 (09.10.2025 Gazette 2025/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **02.04.2024  KR 20240044979**

(71) Applicant: **LG Energy Solution, Ltd.
Seoul 07335 (KR)**

(72) Inventor: **YUN, Hyun Woong
Daejeon 34122 (KR)**

(74) Representative: **Goddar, Heinz J.
Boehmert & Boehmert
Anwaltspartnerschaft mbB
Pettenkoferstrasse 22
80336 München (DE)**

(54) **ELECTRODE ASSEMBLY AND SECONDARY BATTERY COMPRISING SAME**

(57)     The present invention relates to an electrode assembly excellent in insulation and a secondary battery including the same, and the electrode assembly according to the present invention includes a positive electrode, a negative electrode, and a separator disposed between the positive electrode and the negative electrode, satisfies Expression (1) below, and has a thickness of 10 mm or greater.

$$\text{Expression (1): } (A \times B) + 6B \geq 90$$

In Expression (1) above,
A is a ratio of an overall length to an overall width of the electrode assembly, and
B is a thickness value of the separator measured in $\mu$m.

EP 4 765 299 A1

**(Cont. next page)**

[FIG. 1]

**Description**

**TECHNICAL FIELD**

This application claims priority from Korean Patent Application No. 10-2024-0044979, filed on April 2, 2024, the disclosure of which is incorporated by reference herein.

The present invention relates to an electrode assembly with excellent insulation and a secondary battery including the same.

**BACKGROUND ART**

In general, a secondary battery is prepared in a method in which electrode active material slurries are applied onto a positive electrode current collector and a negative electrode current collector to prepare a positive electrode and a negative electrode, respectively, the electrodes are stacked on respective sides of a separator to form an electrode assembly in a certain shape, and then the electrode assembly is accommodated in a battery case, and an electrolyte solution is injected thereto.

When the thickness of the electrode assembly increases, that is, when a greater number of electrodes are stacked, more active material may be included, thereby increasing the capacity of the battery.

However, due to the stack, a large number of electrodes are connected in parallel, which may decrease the resistance of the electrode assembly, causing a problem of insulation degradation.

Therefore, for the secondary battery including an electrode assembly having a thickness exceeding a certain level, securing the appropriate insulation is an important task.

**DISCLOSURE OF THE INVENTION**

**TECHNICAL PROBLEM**

The present invention seeks to solve the problem of insulation degradation that becomes more severe as the thickness of the electrode assembly increases, and accordingly, the present invention provides an electrode assembly configured to have its size and have a separator with a thickness satisfying a particular expression, and provides a secondary battery including the same.

**TECHNICAL SOLUTION**

The present invention provides an electrode assembly including a positive electrode, a negative electrode, and a separator disposed between the positive electrode and the negative electrode, wherein the electrode assembly satisfies Expression (1) below, and has a thickness of 10 mm or greater.

$$\text{Expression (1): } (A \times B) + 6B \geq 90$$

In Expression (1) above,

A is a ratio of an overall length to an overall width of the electrode assembly,
B is a thickness value of the separator measured in $\mu$m.

The present invention provides a secondary battery including the electrode assembly; an electrolyte; and a battery case accommodating the electrode assembly and the electrolyte.

**ADVANTAGEOUS EFFECTS**

The electrode assembly according to the present invention is configured to have a thickness of 10 mm or greater, and have its aspect ratio and a thickness value of the separator which satisfy a particular expression, and accordingly, there are effects of electrode resistivity and insulation by the separator being appropriately formed, as well as high initial capacity.

That is, since a secondary battery including the electrode assembly exhibits high capacity and excellent insulation, there are advantages of having less risks of explosion caused by internal short circuit and physical/electrical impact, and also less risks of degradation in battery performance due to a voltage drop.

## BRIEF DESCRIPTION OF THE DRAWINGS

FIG. 1 is an exploded perspective view of a secondary battery according to an embodiment of the present invention.
FIG. 2 is a diagram illustrating the configuration of a pouch according to an embodiment.

## MODE FOR CARRYING OUT THE INVENTION

Hereinafter, the present invention will be described in more detail.

According to increasing demand for batteries that require high capacity, such as a battery for electric vehicles, the rated capacity for a secondary battery cell is increasing, and accordingly, the size and thickness of an electrode assembly tends to increase. That is, due to larger numbers of electrodes stacked in parallel for a larger capacity, resistance of the electrode assembly decreases, causing a problem of insulation degradation. In particular, since a pouch-type secondary battery has a durability lower than that of a can-type secondary battery, the pouch-type secondary battery may become more vulnerable to safety accidents, such as overheating and explosion, in case of internal short circuit occurring due to the insulation degradation.

As a result of repeated researches conducted for developing a secondary battery excellent in insulation as well as having high capacity, the present inventors found out that, when the ratio of the overall length to the overall width (hereinafter, aspect ratio) of an electrode assembly and the thickness of a separator included in the electrode assembly satisfy a particular condition, insulation characteristics may be excellent even in a medium- and large-size cell with a thickness of 10 mm or greater, and has completed the present invention.

The insulation characteristics have important impact on safety of the secondary battery, and a method of increasing the aspect ratio of the electrode assembly is generally used for achieving excellent insulation characteristics. When the thickness of the electrode assembly is less than 10 mm, excellent insulation may be maintained just by adjusting the aspect ratio of the electrode assembly, but when the thickness of the electrode assembly is greater than 10 mm, insulation may decrease rapidly due to parallel connection of the electrodes, and therefore, it can be seen that the thickness of a separator needs to be controlled, together with the aspect ratio of the electrode assembly.

In this specification, the overall length refers to a length measured in a length direction, and the overall width refers to a length measured in a width direction. Here, for the description of the length direction, assuming the electrode assembly has a rectangular shape, a direction in which a long side is measured refers to the length direction, and a direction perpendicular to the length direction, that is, a direction in which a short side is measured, refers to the width direction. Layers of a positive electrode, layers of a negative electrode, and a separator which constitute the electrode assembly may be stacked in a thickness direction perpendicular to both of the length direction and the width direction.

The electrode assembly according to the present invention is characterized by including a positive electrode, a negative electrode, and a separator disposed between the positive electrode and the negative electrode, and satisfying Expression (1) below, and having a thickness of 10 mm or greater.

$$\text{Expression (1): } (A \times B) + 6B \geq 90$$

In Expression (1) above,

A is a ratio of an overall length to an overall width of the electrode assembly.
B is a thickness value of the separator measured in $\mu$m.

Meanwhile, in Expression (1) above, (A x B) + 6B may be 90 or greater, preferably 95 or greater, and more preferably 100 or greater. However, considering the energy density of a cell, 400 or less is preferred. When (A x B) + 6B is 90 or greater, the thickness of the separator is appropriately formed in consideration of the assembly resistance determined by the length of an electrode constituting the electrode assembly, so that excellent insulation characteristics may be achieved without additional degradation of battery performance.

According to an embodiment of the present invention, in Expression (1) above, A may be 1 to 10.5, and B may be 8 to 50.

In a particular embodiment, when A in Expression (1) above is 5 or greater, and particularly 6 to 10.5, B above may be 8 to 40, preferably 9 to 30, and more preferably 9 to 20.

In another embodiment, when A in Expression (1) above is 2.5 or greater and less than 5, and particularly 2.5 to 3.5, B above may be 10 to 45, preferably 11 to 35, and more preferably 11 to 25.

In another embodiment, when A in Expression (1) above is 1 or greater and less than 2.5, and particularly 1 to 2, B above may be 12 to 50, preferably 13 to 40, and more preferably 13 to 30.

If the value of A increases, that is, the aspect ratio of the electrode assembly increases, the length of the electrode increases, and thus, the assembly resistance increases, thereby exhibiting relatively excellent insulation. Consequently, even with a separator having a relatively small thickness, sufficient insulation characteristics may be secured. On the contrary, if the value of A decreases, that is, the aspect ratio of the electrode assembly decreases, the length of the electrode decreases, so that the assembly resistance decreases, thereby relatively reducing the insulation characteristics. Therefore, it is desirable to secure sufficient insulation by increasing the thickness of the separator as previously described.

Meanwhile, the overall length of the electrode assembly may be 20 mm to 1000 mm, particularly, 50 mm to 800 mm, and more particularly 100 mm to 600 mm, and the overall width may be 20 mm to 1000 mm, particularly, 40 mm to 400 mm, and more particularly, 50 mm to 200 mm.

In an embodiment of the present invention, a leakage current, measured after a voltage of 50 V is applied to the electrode assembly for 10 seconds, may be 0.5 mA or less. As previously described, since the electrode assembly satisfying Expression (1) above has excellent insulation, the leakage current may be low as above. In particular, the leakage current is a value measured when the voltage is applied in a DC condition using a hipot tester.

In addition, the thickness of the electrode assembly may be 10 mm or greater, particularly, 13 mm or greater, and more particularly, 15 mm or greater, 200 mm or less, or 100 mm or less. As previously described, as the thickness increases, the insulation decreases, so that the present invention may be more usefully applied. However, when the thickness of the electrode assembly is less than 10 mm, since a phenomenon of insulation degradation is insignificant, it is not appropriate to predict the insulation through Expression (1).

A stack-type electrode assembly, having a structure in which a positive electrode and a negative electrode are stacked in sequence with a separator therebetween, is preferred for the electrode assembly. Since the present invention is to compensate for the insulation degradation problem while utilizing the effect of capacity improvement that may be obtained by stacking the electrodes in parallel, the stack-type electrode assembly is preferred for the electrode assembly.

Meanwhile, a secondary battery according to the present invention includes the electrode assembly; an electrolyte; and a battery case accommodating the electrode assembly and the electrolyte.

The battery case may include a barrier layer, a substrate layer formed on one surface of the barrier layer, and a sealant layer formed on the other surface of the barrier layer, and may be a pouch including at least one cup part that is curved in one direction, and the electrode assembly and the electrolyte may be accommodated in the at least one cup part.

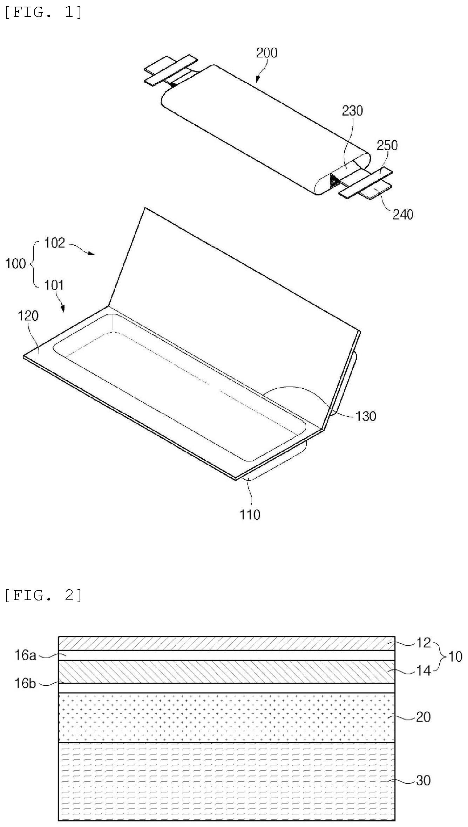

FIG. 1 is an exploded perspective view of a pouch-type secondary battery illustrating an embodiment of a secondary battery according to the present invention, and FIG. 2 is a drawing illustrating a cross section of a pouch film laminate. Hereinafter, with reference to the drawings, a secondary battery according to an embodiment of the present invention will be described in more detail.

## Pouch

A pouch 100 may be prepared in a method where a pouch film laminate, having flexibility and having a substrate layer 10, a barrier layer 20, and a sealant layer 30 being laminated in sequence, is inserted into a press forming device, and pressure is applied to a partial region of the pouch film laminate by a punch to stretch, thereby forming a cup part (accommodating part) curved in one direction.

## Substrate layer

The substrate layer 10 is disposed on the outermost layer of the pouch to protect the electrode assembly from external impact, and to electrically insulate the electrode assembly.

The substrate layer 10 may be made of a polymer material, which may be one or more polymer materials selected from the group consisting of, for example, polyethylene, polypropylene, polycarbonate, polyethylene terephthalate, polyvinyl chloride, an acrylate-based polymer, polyacrylonitrile, polyimide, polyamide, cellulose, aramid, nylon, polyester, polyparaphenylene benzobisoxazole, polyarylate, and Teflon.

The substrate layer 10 may be a single-layer structure, and as illustrated in FIG. 2, the substrate layer 10 may also be a multi-layer structure in which different polymer films 12 and 14 are laminated. In the case that the substrate layer 10 is a multi-layer structure, an adhesion layer 16a may be disposed between the polymer films.

Meanwhile, the substrate layer 10 may have a total thickness of 10 μm to 60 μm, preferably of 20 μm to 50 μm, and more preferably of 30 μm to 50 μm. In the case that the substrate layer is the multi-layer structure, the thickness is a thickness including the adhesion layer. When the substrate layer 10 falls within the above range, durability, insulation, and formability are excellently exhibited. When the thickness of the substrate layer is too small, the durability may decrease, and damage on the substrate layer may occur in a forming process, and when the thickness is too large, the formability may decrease, and the total thickness of the pouch may increase, thereby reducing a space for accommodating a battery, and decreasing the energy density.

According to an embodiment, the substrate layer 10 may be a stacked structure of a polyethylene terephthalate (PET) film and a nylon film. At this time, it is preferred that the nylon film is disposed on the barrier layer 20 side, that is, an inner side, and the polyethylene terephthalate film is disposed on a surface side of the pouch.

Polyethylene terephthalate (PET) is excellent in durability and electrical insulation, and therefore, when the PET film is disposed on the surface side, durability and insulation is exhibited excellently. However, since the PET film has weak adhesiveness to an aluminum alloy thin film constituting the barrier layer 20, and has a different stretching behavior, in case of disposing the PET film on the side of the barrier layer, separation between the substrate layer and the barrier layer may occur during a forming process, and the barrier layer fails to stretch uniformly, causing a problem of decreased formability. In comparison, since the nylon film has a similar stretching behavior with the aluminum alloy thin film constituting the barrier layer 20, disposing the nylon film between the polyethylene terephthalate and the barrier layer may have the effect of improving the formability.

The polyethylene terephthalate film may have a thickness of 5 $\mu$m to 20 $\mu$m, preferably 5 $\mu$m to 15 $\mu$m, and more preferably 7 $\mu$m to 15 $\mu$m, and the nylon film may have a thickness of 2010 $\mu$m to 40 $\mu$m, preferably 2010 $\mu$m to 35 $\mu$m, and more preferably 2515 $\mu$m to 25 $\mu$m. When the thicknesses of the polyethylene terephthalate film and the nylon film fall within the above ranges, respectively, excellent formability and rigidity after the forming are exhibited.

### Barrier layer

The barrier layer 20 serves to secure mechanical strength of the pouch 100, prevent access of gas, moisture, etc., from the outside of a secondary battery, and prevent leakage of an electrolyte.

The barrier layer 20 may have a thickness of 40 $\mu$m to 100 $\mu$m, more preferably 50 $\mu$m to 80 $\mu$m, and even more preferably 60 $\mu$m to 80 $\mu$m. When the thickness of the barrier layer falls within the above range, formability is improved to increase a forming depth of a cup part, or occurrence of cracks and/or pinholes is reduced even in the forming of 2 cups, thereby improving the resistance against external stress after the formation.

Meanwhile, the barrier layer 20 may be made of a metal material, and particularly, made of an aluminum alloy thin film.

The aluminum alloy thin film may include aluminum, and a metal element other than the aluminum, for example, one, or two or more selected from the group consisting of iron (Fe), copper (Cu), chrome (Cr), manganese (Mn), nickel (Ni), magnesium (Mg), silicon (Si), and zinc (Zn).

Preferably, the aluminum alloy thin film may include iron (Fe) in an amount of 1.2 wt% to 1.7 wt%, preferably, 1.3 wt% to 1.7 wt%, and more preferably 1.3 wt% to 1.45 wt%. When the amount of iron (Fe) in the aluminum alloy thin film falls within the above ranges, occurrence of cracks or pinholes may be minimized even if the cup part is formed deep.

### Sealant layer

The sealant layer 30 is bonded by heat pressing to seal the pouch, and is positioned on the innermost layer of a pouch film laminate 1.

Since the sealant layer 30 is a surface to be in contact with the electrolyte and the electrode assembly after the pouch is formed, the sealant layer is required to have insulation and corrosion resistance, and since the movement of substances needs to be blocked between the inside and outside by sealing the inside completely, high sealing property is required.

The sealant layer 30 may be made of a polymer material, which may be one or more selected from the group consisting of, for example, polyethylene, polypropylene, polycarbonate, polyethylene terephthalate, polyvinyl chloride, an acrylate-based polymer, polyacrylonitrile, polyimide, polyamide, cellulose, aramid, nylon, polyester, polyparaphenylene benzobisoxazole, polyarylate, and Teflon, and among these, polypropylene (PP), which is excellent in mechanical property such as tensile strength, rigidity, surface hardness, wear resistance, and heat resistance, and chemical property such as corrosion resistance, is particularly preferred.

More particularly, the sealant layer 30 may include polypropylene, cast polypropylene (CPP), acid modified polypropylene, a polypropylene-butylene-ethylene copolymer, or a combination thereof.

The sealant layer 30 may have a single-layer structure, and may also have a multi-layer structure including two or more layers of different polymer materials.

The sealant layer may have a total thickness of 60 $\mu$m to 100 $\mu$m, preferably 60 $\mu$m to 90 $\mu$m, and more preferably 70 $\mu$m to 90 $\mu$m. When the thickness of the sealant layer is too small, sealing durability and insulation may decrease, and when the thickness is too large, flexibility may decrease, and the total thickness of the pouch film laminate may increase, causing reduction in energy density per volume.

The pouch film laminate 1 may be prepared in a preparation method of a pouch film laminate widely known in the relevant art. For example, the pouch film laminate may be prepared in a method where the substrate layer 10 is bonded to an upper surface of the barrier layer 20 through an adhesive, and the sealant layer 30 is formed on a lower surface of the barrier layer 20 through coextrusion or an adhesive, but the method is not limited thereto.

The pouch 100 is prepared by inserting the above-described pouch film laminate into a forming device and applying pressure to a partial region of the pouch film laminate by a punch to form a cup part. At this time, the pressure may be about 0.3 MPa to 1 MPa, preferably about 0.3 MPa to 0.8 MPa, and more preferably about 0.4 MPa to 0.6 MPa. During the forming of the cup part, if the pressure is too low, wrinkles may occur due to excessive drawing, if the pressure is too high, a forming depth may be reduced since the drawing is not done well.

Meanwhile, the moving speed of the punch may be 20 mm/min to 80 mm/min, preferably 30 mm/min to 70 mm/min, and more preferably 40 mm/min to 60 mm/min. If the pressure is too low or the moving speed of the punch is too high during the forming, wrinkles may occur due to buckling, and if the pressure is too high or the moving speed of the punch is too low during the forming, stress concentrated on a corner of the cup part, during the forming, may increase, so that occurrence of pinholes or cracks may increase.

The pouch 100 of the present invention, prepared in the above-described method, includes a lower case 101, an upper case 102, and a folding part 130 connecting the upper case and the lower case, and the upper case and/or lower case includes a cup part 110 in the form of being indented in one direction.

In particular, the pouch 100 according to the present invention may be a 1-cup type where the cup part 110 is formed only in the lower case 101 as illustrated in FIG. 1, but an embodiment is not limited thereto, and the pouch 100 may also be a 2-cup type where the cup part is formed both in the upper case and the lower case. The 2-cup pouch may accommodate a thicker electrode assembly than that of the one-cup pouch because the upper case is folded such that the cup part of the upper case and the cup part of the lower case face each other after the electrode assembly and the electrolyte are accommodated, and accordingly, it is advantageous in achieving high energy density.

The cup part 110 has an accommodating space for accommodating the electrode assembly 200. Meanwhile, the pouch 100 may include a terrace 120 around the cup part 110. The terrace 120 refers to a portion of the pouch film laminate not formed, that is, a remaining region excluding the cup part 110. The terrace 120 is a portion that is sealed through thermal bonding in a sealing process, after the electrode assembly 200 is accommodated in the cup part 110 and an electrolyte solution is injected.

The cup part 110 may include a bottom surface and a perimeter surface. The perimeter surface may connect the bottom surface and the terrace 120. The perimeter surface may be included in plurality, and more particularly, four perimeter surfaces may be included. The bottom surface may cover one side of the electrode assembly 200, and the perimeter surface may surround the perimeter of the electrode assembly 200.

Meanwhile, after the lower case 101 is connected to the upper case 102, the electrode assembly 200 is accommodated in the cup part 110, and the electrolyte solution is injected, the folding part 130 is folded so that the upper case 102 seals the cup part 110 of the lower case 101. In case of including the folding part 130, since the lower case 101 and the upper case 102 are integrally connected, the number of sides to be sealed is reduced in a following sealing process, which has the effect of improving processibility.

The folding part 130 may be spaced apart from the cup part 110, and the distance between the folding part 130 and the cup part 110 may be about 0.5 mm to 3 mm, and preferably about 0.5 mm to 2 mm. If the folding part 130 is too close to the cup part 110, folding may not be performed smoothly, and if the folding part 130 is too far from the cup part 110, the total volume of a secondary battery may increase, and thus, the energy density per volume may decrease. In case of the 2-cup case, the folding part may be formed satisfying the above distance for each cup part.

**Electrode assembly**

The electrode assembly 200 may include a plurality of electrodes and a plurality of separators alternately stacked. The plurality of electrodes may be alternately stacked with the separator therebetween, and may include a positive electrode and a negative electrode having opposite polarities.

In addition, a plurality of electrode tabs 230, welded together, may be provided in the electrode assembly 200. The plurality of electrode tabs 230 may be connected to the plurality of electrodes 210, and protrude from the electrode assembly 200 to the outside to function as a movement path of electrons between the inside and outside of the electrode assembly 200. The plurality of electrode tabs 230 may be positioned inside the pouch 100.

The electrode tab 230 connected to the positive electrode and the electrode tab 230 connected to the negative electrode may protrude in different directions with respect to the electrode assembly 200. However, an embodiment is not limited thereto, and the electrode tab 230 connected to the positive electrode and the electrode tab 230 connected to the negative electrode may also protrude side by side in the same direction.

A lead 240 providing electricity to the outside of the secondary battery may be connected to the plurality of electrode tabs 230 by spot welding, etc. One end of the lead 240 may be connected to the plurality of electrode tabs 230, and the other end may protrude outside the pouch 100.

A portion of the lead 240 may be surrounded by an insulation part 250. For example, the insulation part 250 may include an insulating tape. The insulation part 250 may be positioned between the terrace 120 of the first case 101 and the second case 102, and in this state, the terrace 120 and the second case 102 may be thermally bonded to each other. In this case, the terrace 120 and a portion of the second case 102 may be thermally bonded to the insulation part 250. Therefore, the insulation part 250 may prevent electricity generated from the electrode assembly 200 from flowing to the pouch 100 through the lead 240, and maintain the sealing of the pouch 100.

Meanwhile, a secondary battery according to the present invention may further include, as needed, at least one fixing member on an outer surface of the electrode assembly. In case of an electrode assembly in a rectangular shape having a long overall length, compared to the overall width, (for convenience, referred to as a long-cell), a fixing member, which winds the electrode assembly in the overall width direction to fix, may be used to avoid misalignment of the constituting elements of the electrode assembly, that is, a positive electrode, a negative electrode, and a separator.

The fixing member may have a porous structure. When the fixing member has a porous structure, an electrolyte may penetrate the fixing member to impregnate into the electrode assembly, thereby preventing reduction in electrolyte impregnation in the electrode assembly due to the fixing member. In particular, the fixing member may be a finishing tape in which an adhesive layer is formed on one surface of a substrate layer made of a polymer material having a porous structure, but is not limited thereto. The polymer material may be, for example, polyethylene terephthalate (PET), polyvinyl chloride (PVC), polyethylene (PE), etc., but is not limited thereto.

As the fixing member, a fixing member having a width of about 10 to 50 mm or about 20 to 40 mm along the overall width direction of the electrode assembly is preferred. When the width of the fixing member is too large, the outer surface area of the electrode assembly covered by the fixing member may increase, and thus the contact area with the electrolyte may decrease, causing reduction in electrolyte impregnation, and friction between the electrode assembly and a battery case may decrease to cause reduction in impact resistance. Meanwhile, when the width of the fixing member is too small, fixing effect for the electrode assembly may be reduced.

The secondary battery may include 2 to 10 fixing members, preferably 2 to 8, and more preferably 3 to 7 fixing members. At this time, the fixing members may be disposed at a position symmetrical left and right along the overall length direction, and preferably, the fixing members may be disposed equally spaced apart from each other. When the fixing members are provided in plurality, and disposed as above, the electrode assembly in the long-cell structure with a long overall length may be firmly fixed.

Meanwhile, the contact area of the fixing member and the electrode assembly may be 30% or less, 25% or less, or 20% or less of the total surface area of the electrode assembly. In particular, the area in which the fixing member and the electrode assembly are in contact with each other may be 0 to 30%, 1 to 30%, 5 to 30%, 5 to 25%, or 5 to 20% of the total surface area of the electrode assembly.

The contact area of the fixing member and the electrode assembly may be adjusted by controlling the width of the fixing member to be used, or the number of fixing members to be used. Since a generally-used fixing member is made of a material having a small friction coefficient compared to the separator disposed on the outermost surface of the electrode assembly, the increased area of the fixing member surrounding the electrode assembly may cause decrease in friction between the electrode assembly and the inner surface of the battery case. Therefore, when the fixing member is used, it is desirable to suppress the reduction in friction by adjusting the contact area with the electrode assembly to 30% or less.

Meanwhile, any positive electrode, negative electrode, separator, and electrolyte may be used in the present invention for the positive electrode, the negative electrode, the separator, and the electrolyte, without limitation, as long as they are generally used in a secondary battery, but the following description may be considered as preferred examples thereof.

The positive electrode may be a sheet-type positive electrode, which may include a metal thin plate excellent in conductivity, for example, a positive electrode current collector formed of an aluminum foil, and a positive electrode active material layer applied onto one side or one and the other sides of the positive electrode current collector. The negative electrode may be a sheet-type negative electrode, which may include a metal thin plate excellent in conductivity, for example, a negative electrode current collector formed of a copper (Cu) or nickel (Ni) foil, and a negative electrode active material layer applied onto one side or one and the other sides of the negative electrode current collector.

The positive electrode active material layer may include a lithium metal oxide, etc., containing a transition metal such as lithium and cobalt, manganese and/or nickel, as a positive electrode active material, and as needed, may further include a conductive material and/or a binder. Various materials that are generally used in preparation of a secondary battery may be used without limitation for the positive electrode active material, the conductive material, and the binder.

In particular, the positive electrode may include one or more selected from the group consisting of a lithium nickel-based composite oxide, a lithium manganese-based composite oxide, and a lithium iron phosphate-based composite oxide as a positive electrode active material, and preferably include a lithium nickel-based composite oxide, and the lithium nickel-based composite oxide may be represented by Chemical Formula 1 below.

[Chemical Formula 1] $\qquad$ $Li_{1+x}(Ni_aCo_bMn_cM_d)O_2$

In Formula 1 above,

M is one or more selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and

$-0.4 \leq x \leq 0.4$, $0.30 \leq a \leq 1$, $0 \leq b \leq 0.70$, $0 \leq c \leq 0.70$, $0 \leq d \leq 0.10$, and $a+b+c+d=1$.

1+x above refers to a molar ratio of lithium in the lithium nickel-based composite oxide, wherein $-0.1 \leq x \leq 0.2$ or $0 \leq x \leq 0.2$ may be satisfied. When the molar ratio of lithium falls within the above range, a crystal structure of the lithium nickel-based composite oxide may be stably formed.

a above refers to a molar ratio of nickel among the entire metals excluding lithium in the lithium nickel-based composite oxide, wherein $0.70 \leq a<1$, $0.80 \leq a<1$, or $0.90 \leq a<1$ may be satisfied. When the molar ratio of nickel falls within the above ranges, high energy density may be achieved, and thus, high capacity is possible.

b above refers to a molar ratio of cobalt among the entire metals excluding lithium in the lithium nickel-based composite oxide, wherein $0<b \leq 0.25$, $0<b \leq 0.15$, or $0<b \leq 0.05$ may be satisfied. When the molar ratio of cobalt falls within the above range, good resistance characteristics and output characteristics may be achieved.

c above refers to a molar ratio of manganese in the entire metals excluding lithium in the lithium nickel-based composite oxide, wherein $0<c \leq 0.25$, $0<c \leq 0.15$, or $0<c \leq 0.05$ may be satisfied. When the molar ratio of manganese falls within the above ranges, the positive electrode active material has excellent structural stability.

d above refers to a molar ratio of an M element among the entire metals excluding lithium in the lithium nickel-based composite oxide, wherein $0 \leq d \leq 0.08$, $0 \leq d \leq 0.05$, or $0 \leq d \leq 0.03$ may be satisfied.

In particular, a, b, c, and d in Formula 1 above may satisfy $0.80 \leq a<1$, $0<b \leq 0.15$, $0<c \leq 0.15$, and $0 \leq d \leq 0.05$, respectively.

When the lithium-nickel-based composite oxide is an NCM oxide containing all of nickel, cobalt, and manganese, resistivity of the positive electrode may be low, and therefore, the phenomenon of insulation degradation, caused by the increase in thickness of the electrode assembly, previously described, may become more evident, which indicates that the effect according to the composition satisfying Expression (1) above may be maximized.

Meanwhile, the lithium manganese-based composite oxide may be one or more selected from the group consisting of $Li_pMn_{1-q}M^a_qA_2$, $Li_pMn_2O_{4-r}X_r$, $Li_pMn_{2-q}M^a_qM^b_rA_4$, $Li_pCo_{1-q}M^a_qA_2$, $Li_pCo_{1-q}M^a_qO_{2-r}X_r$, $Li_pNi_{1-q}M^a_qO_{2-r}X_r$, $Li_pNi_{1-q}Co_qO_{2-r}X_r$, $Li_pNi_{1-q-r}Co_qM^a_rA_w$, $Li_pNi_{1-q-r}Co_qM^a_rO_{2-w}X_w$, $Li_pNi_{1-q-r}Mn_qM^a_rA_w$, and $Li_pNi_{1-q-r}Mn_qM^a_rO_{2-w}X_w$, and at this time, p, q, r, and w may satisfy $0.9 \leq p \leq 1.6$, $0 \leq q \leq 1$, $0 \leq r \leq 1$, and $0 \leq w \leq 2$ respectively, $M^a$ and $M^b$ are elements which are the same as or different from each other, each of which is one or more elements selected from the group consisting of Mg, Al, Co, K, Na, Ca, Si, Ti, Sn, V, Ge, Ga, B, As, Zr, Mn, Cr, Fe, Sr, V, and a rare earth element, A is one or more elements selected from the group consisting of O, F, S, and P, and X is one or more elements selected from the group consisting of F, S, and P.

In addition, the lithium iron phosphate-based composite oxide may be represented by Formula 2 below.

[Formula 2] $\qquad$ $LiFe_{1-k}M^c_kPO_4$

In Formula 2 above,

$M^C$ is one or more selected from Ni, Co, Mn, Al, Mg, Y, Zn, In, Ru, Sn, Sb, Ti, Te, Nb, Mo, Cr, Zr, W, Ir, and V, and

$0 \leq k<1$.

The negative electrode active material layer may include a carbon-based material such as graphite; metals or alloys including the metals; an oxide of the metals; and a composite of the metals and carbon as a negative electrode active material, and as needed, may further include a conductive material and/or a binder. Various materials that are generally used in preparation of a secondary battery may be used without limitation for the negative electrode active material, the conductive material, and the binder.

In particular, the negative electrode may include graphite as a negative electrode active material. When the negative electrode active material is graphite, resistivity of the negative electrode may be low, and therefore, the phenomenon of insulation degradation, caused by the increase in thickness of the electrode assembly previously described, may become more evident, which indicates that the effect according to the composition satisfying Expression (1) above may be maximized.

The separator may be a porous polymer film generally used as a conventional separator, and for example, a polyolefin-based porous polymer film, such as an ethylene homopolymer, propylene homopolymer, an ethylene-butene copolymer, an ethylene-hexene copolymer, an ethylene-methacrylate copolymer, and the like, may be used alone, or a stack thereof may be used. In addition, a polyolefin-based porous polymer film applied with an inorganic particle (e.g. $Al_2O_3$) or a general porous non-woven fabric, for example, a non-woven fabric formed of a glass fiber with high melting point, a polyethylene terephthalate fiber, etc., may be used, but the material is not limited thereto.

Meanwhile, any electrolyte enabling lithium ions, generated by electrochemical reaction of electrodes during charging and discharging, to move may be used without limitation, and for example, a non-aqueous organic solvent with a lithium salt dissolved therein may be used.

Any compound capable of providing lithium ions that are used in a lithium secondary battery may be used for the lithium salt without particular limitation. In particular, for the lithium salt, $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, $LiB(C_2O_4)_2$, or the like may be used. A concentration of the lithium salt may be appropriately changed within a generally usable range, but the range may be 0.1 M to 5.0 M, and preferably, 0.1 M to 3.0 M.

Any non-aqueous organic solvent may be used, without particular limitation, as long as it may function as a medium through which ions involved in an electrochemical reaction of a battery may move. For example, a cyclic carbonate-based solvent such as ethylene carbonate (EC), propylene carbonate (PC), and vinylene carbonate, a linear carbonate-based organic solvent such as dimethyl carbonate (DMC), diethyl carbonate (DEC), dipropyl carbonate, and ethylmethyl carbonate (EMC), or a mixed organic solvent thereof may be used.

The secondary battery may be applied to various devices. For example, the secondary battery may be applied to the field of electric vehicles including an electric bicycle, an electric vehicle, a hybrid electric vehicle (HEV), etc.

Therefore, according to another embodiment of the present invention, a battery module including the secondary battery as a unit cell and a battery pack including the battery module are provided.

The battery module or battery pack may be used as a power source for any one or more medium and large-sized devices among a power tool; an electric vehicle including an electric vehicle (EV), a hybrid electric vehicle, and a plug-in hybrid electric vehicle (PHEV); or a system for power storage.

Hereinafter, the present invention is described in more detail through particular examples.

## <u>MODE FOR CARRYING OUT THE INVENTION</u>

### [Example and Comparative Example: Preparation of Electrode Assembly]

### Example 1

A positive electrode including $Li[Ni_{0.8}Co_{0.1}Mn_{0.1}]O_2$ as a positive electrode active material, and a negative electrode including graphite as a negative electrode active material were alternately stacked with a safety reinforced separator (SRS) with a thickness of 17 $\mu$m therebetween, to prepare a stack-type electrode assembly with 600 mm in overall length, 100 mm in overall width, and 13.7 mm in thickness.

### Examples 2 to 5 and Comparative Example 1

Stack-type electrode assemblies according to Examples 2 to 5 and Comparative Example 1 were prepared in the same process as that of Example 1 above, except that safety reinforced separators with respective thicknesses of 15 $\mu$m, 13 $\mu$m, 11 $\mu$m, 9 $\mu$m, and 7 $\mu$m were used instead of the safety reinforced separator with a thickness of 17 $\mu$m.

### Example 6

A stack-type electrode assembly was prepared in the same process as that of Example 1 above, except that the overall length of the electrode assembly was changed to 350 mm.

### Examples 7 to 9 and Comparative Examples 2 to 3

Stack-type electrode assemblies according to Examples 7 to 9 and Comparative Examples 2 to 3 were prepared in the same process as that of Example 6 above, except that safety reinforced separators with respective thicknesses of 15 $\mu$m, 13 $\mu$m, 11 $\mu$m, 9 $\mu$m, and 7 $\mu$m were used instead of the safety reinforced separator with a thickness of 17 $\mu$m.

### Example 10

A stack-type electrode assembly was prepared in the same process as that of Example 1 above, except that the overall length of the electrode assembly was changed to 250 mm.

### Examples 11 to 13 and Comparative Examples 4 to 5

Stack-type electrode assemblies according to Examples 11 to 13 and Comparative Examples 4 to 5 were prepared in the same process as that of Example 10 above, except that safety reinforced separators with respective

thicknesses of 15 μm, 13 μm, 11 μm, 9 μm, and 7 μm were used instead of the safety reinforced separator with a thickness of 17 μm.

**Example 14**

A stack-type electrode assembly was prepared in the same process as that of Example 1 above, except that the overall length of the electrode assembly was changed to 200 mm.

**Examples 15 to 16 and Comparative Examples 6 to 8**

Stack-type electrode assemblies according to Examples 15 to 16 and Comparative Examples 6 to 8 were prepared in the same process as that of Example 14 above, except that safety reinforced separators with respective thicknesses of 15 μm, 13 μm, 11 μm, 9 μm, and 7 μm were used instead of the safety reinforced separator with a thickness of 17 μm.

**Example 17**

A stack-type electrode assembly was prepared in the same process as that of Example 1 above, except that the overall length of the electrode assembly was changed to 100 mm.

**Examples 18 to 19 and Comparative Examples 9 to 11**

Stack-type electrode assemblies according to Examples 18 to 19 and Comparative Examples 9 to 11 were prepared in the same process as that of Example 17 above, except that safety reinforced separators with respective thicknesses of 15 μm, 13 μm, 11 μm, 9 μm, and 7 μm were used instead of the safety reinforced separator with a thickness of 17 μm.

**Comparative Example 12**

A positive electrode including $Li[Ni_{0.8}Co_{0.1}Mn_{0.1}]O_2$ as a positive electrode active material, and a negative electrode including graphite as a negative electrode active material were alternately stacked with a safety reinforced separator (SRS) with a thickness of 17 μm therebetween, to prepare a stack-type electrode assembly with 250 mm in overall length, 100 mm in overall width, and 5.7 mm in thickness.

**Comparative Examples 13 to 17**

Stack-type electrode assemblies according to Comparative Examples 13 to 17 were prepared in the same process as that of Comparative Example 12 above, except that safety reinforced separators with respective thicknesses of 15 μm, 13 μm, 11 μm, 9 μm, and 7 μm were used instead of the safety reinforced separator with a thickness of 17 μm.

**Comparative Example 18**

A positive electrode including $Li[Ni_{0.8}Co_{0.1}Mn_{0.1}]O_2$ as a positive electrode active material, and a negative electrode including graphite as a negative electrode active material were alternately stacked with a safety reinforced separator (SRS) with a thickness of 17 μm therebetween, to prepare a stack-type electrode assembly with 100 mm in overall length, 100 mm in overall width, and 5.7 mm in thickness.

**Comparative Examples 19 to 23**

Stack-type electrode assemblies according to Comparative Examples 19 to 23 were prepared in the same process as that of Comparative Example 18 above, except that safety reinforced separators with respective thicknesses of 15 μm, 13 μm, 11 μm, 9 μm, and 7 μm were used instead of the safety reinforced separator with a thickness of 17 μm.

**[Experimental Example]**

**Experimental Example 1: Evaluation on Insulation**

For the electrode assemblies prepared according to Examples 1 to 19 and Comparative Examples 1 to 17, an AC/DC/IR Hipot tester (model 19052, Chroma) was used for evaluating the insulation. In particular, a voltage of 50 V was applied for 10 seconds in a DC condition, and then leakage current was measured, and PASS if the value was 0.5 mA or less, and FAIL if the value was greater than 0.5 mA were listed on Table 1 below.

[Table 1]

| | Thickness of electrode assembly (mm) | Overall Length (mm) | Overall width (mm) | Aspect ratio (A) | Thickness of separator ($\mu$m) (B) | (A $\times$ B) + 6B | Evaluation on insulation |
|---|---|---|---|---|---|---|---|
| Example 1 | 13.7 | 600 | 100 | 6 | 17 | 204 | PASS |
| Example 2 | | | | | 15 | 180 | PASS |
| Example 3 | | | | | 13 | 156 | PASS |
| Example 4 | | | | | 11 | 132 | PASS |
| Example 5 | | | | | 9 | 108 | PASS |
| Comparative Example 1 | | | | | 7 | 84 | FAIL |
| Example 6 | 13.7 | 350 | 100 | 3.5 | 17 | 161.5 | PASS |
| Example 7 | | | | | 15 | 142.5 | PASS |
| Example 8 | | | | | 13 | 123.5 | PASS |
| Example 9 | | | | | 11 | 104.5 | PASS |
| Comparative Example 2 | | | | | 9 | 85.5 | FAIL |
| Comparative Example 3 | | | | | 7 | 66.5 | FAIL |
| Example 10 | 13.7 | 250 | 100 | 2.5 | 17 | 144.5 | PASS |
| Example 11 | | | | | 15 | 127.5 | PASS |
| Example 12 | | | | | 13 | 110.5 | PASS |
| Example 13 | | | | | 11 | 93.5 | PASS |
| Comparative Example 4 | | | | | 9 | 76.5 | FAIL |
| Comparative Example 5 | | | | | 7 | 59.5 | FAIL |
| Example 14 | 13.7 | 200 | 100 | 2 | 17 | 136 | PASS |
| Example 15 | | | | | 15 | 120 | PASS |
| Example 16 | | | | | 13 | 104 | PASS |
| Comparative Example 6 | | | | | 11 | 88 | FAIL |
| Comparative Example 7 | | | | | 9 | 72 | FAIL |
| Comparative Example 8 | | | | | 7 | 56 | FAIL |
| Example 17 | 13.7 | 100 | 100 | 1 | 17 | 119 | PASS |
| Example 18 | | | | | 15 | 105 | PASS |
| Example 19 | | | | | 13 | 91 | PASS |
| Comparative Example 9 | | | | | 11 | 77 | FAIL |
| Comparative Example 10 | | | | | 9 | 63 | FAIL |
| Comparative Example 11 | | | | | 7 | 49 | FAIL |

(continued)

| | Thickness of electrode assembly (mm) | Overall Length (mm) | Overall width (mm) | Aspect ratio (A) | Thickness of separator (μm) (B) | (A × B) + 6B | Evaluation on insulation |
|---|---|---|---|---|---|---|---|
| Comparative Example 12 | 5.7 | 250 | 100 | 2.5 | 17 | 144.5 | PASS |
| Comparative Example 13 | | | | | 15 | 127.5 | PASS |
| Comparative Example 14 | | | | | 13 | 110.5 | PASS |
| Comparative Example 15 | | | | | 11 | 93.5 | PASS |
| Comparative Example 16 | | | | | 9 | 76.5 | PASS |
| Comparative Example 17 | | | | | 7 | 59.5 | PASS |
| Comparative Example 18 | 5.7 | 100 | 100 | 1 | 17 | 119 | PASS |
| Comparative Example 19 | | | | | 15 | 105 | PASS |
| Comparative Example 20 | | | | | 13 | 91 | PASS |
| Comparative Example 21 | | | | | 11 | 77 | PASS |
| Comparative Example 22 | | | | | 9 | 63 | PASS |
| Comparative Example 23 | | | | | 7 | 49 | FAIL |

Through the results listed on Table 1 above, it can be seen that, in case of thick cells having a thickness of 13.7 mm, the electrode assemblies according to Examples 1 to 19, satisfying Expression (1) above, had more excellent insulation characteristics than the electrode assemblies according to Comparative Examples 1 to 11 not satisfying Expression (1).

Meanwhile, in case of thin cells having a thickness of 5.7 mm prepared according to Comparative Examples 12 to 23, it can be seen that whether or not Expression (1) above is satisfied does not indicate the insulation characteristics.

That is, it can be seen that Expression (1) is effective as an indicator for predicting the insulation only for the thick cells having a thickness of 10 mm or greater.

Meanwhile, comparing the results of evaluation on the insulation between Comparative Example 17 and Comparative Example 23, it can be seen that, in case of a thin cell having a thickness less than 10 mm, the insulation characteristics were improved only by increasing the aspect ratio without adjusting the thickness of the separator.

**Experimental Example 2: Evaluation on Performance**

A pouch, in which nylon/ polyethylene terephthalate/ Al alloy thin film/ polypropylene were sequentially stacked and a cup part was formed, was prepared. The electrode assembly prepared according to each of Examples 10 to 13 and Comparative Examples 12 to 17 was accommodated in the cup part, then an electrolyte solution, prepared by dissolving $LiPF_6$ with a concentration of 1.0 M in an organic solvent of ethylene carbonate (EC): ethylmethyl carbonate (EMC) mixed in a volume ratio of 30:70, was injected and then sealed, an activation process was performed to prepared a pouch-type secondary battery. The final thickness of the secondary battery including the electrode assembly according to each of Examples 10 to 13 was 14.2 mm, and the final thickness of the secondary battery including the electrode assembly according to each of Comparative Examples 12 to 17 was 6.1 mm.

The prepared secondary battery was charged with a constant current of 0.33 C to 4.2 V at room temperature, then discharged with a constant current of 0.33 C to 2.5 V to check the initial capacity, and charged again with a constant current of 0.33 C to SOC 30%, and then the AC resistance was measured. The results were listed on Table 2 below.

[Table 2]

| | Cell thickness (mm) | Overall Length (mm) | Overall width (mm) | Aspect ratio | Thickness of separator ($\mu$m) | Initial capacity (0.33 C, mAh) | AC resistance (1KHz, mOhm) |
|---|---|---|---|---|---|---|---|
| Example 10 | 14.2 | 250 | 100 | 2.5 | 17 | 58.5 | 0.77 |
| Example 11 | | | | | 15 | 59.5 | 0.75 |
| Example 12 | | | | | 13 | 60.5 | 0.73 |
| Example 13 | | | | | 11 | 61.5 | 0.71 |
| Comparative Example 12 | 6.1 | 250 | 100 | 2.5 | 17 | 24.5 | 1.87 |
| Comparative Example 13 | | | | | 15 | 25.5 | 1.85 |
| Comparative Example 14 | | | | | 13 | 26.5 | 1.83 |
| Comparative Example 15 | | | | | 11 | 27.5 | 1.81 |
| Comparative Example 16 | | | | | 9 | 28.5 | 1.79 |
| Comparative Example 17 | | | | | 7 | 29.5 | 1.77 |

Through the results listed on Table 2 above, it can be seen that the cell including a thick electrode assembly having a thickness of 13.7 mm had a higher capacity and lower resistance than the cell including a thin electrode assembly having a thickness of 5.7 mm.

**Claims**

1. An electrode assembly comprising:

   a positive electrode, a negative electrode, and a separator disposed between the positive electrode and the negative electrode,
   wherein the electrode assembly has a thickness of 10 mm or greater and satisfies Expression (1) :

   $$\text{Expression (1): } (A \times B) + 6B \geq 90$$

   wherein, in Expression (1),

   A is a ratio of an overall length to an overall width of the electrode assembly, and
   B is a thickness value of the separator measured in $\mu$m.

2. The electrode assembly of claim 1, wherein, in Expression (1) above, A is 5 or greater, and B is 8 to 40.

3. The electrode assembly of claim 1, wherein, in Expression (1) above, A is 2.5 or greater and less than 5, and B is 10 to 45.

4. The electrode assembly of claim 1, wherein, in Expression (1) above, A is 1 or greater and less than 2.5, and B is 12 to 50.

5. The electrode assembly of claim 1, wherein a leakage current is 0.5 mA or less when measured after a voltage of 50 V is applied to the electrode assembly for 10 seconds.

6. The electrode assembly of claim 1, wherein the positive electrode comprises one or more selected from the group consisting of a lithium nickel-based composite oxide, a lithium manganese-based composite oxide, and a lithium iron phosphate-based composite oxide as a positive electrode active material.

7. The electrode assembly of claim 1,

wherein the positive electrode comprises a lithium nickel-based composite oxide as a positive electrode active material, and
the lithium nickel-based composite oxide is represented by Chemical Formula 1 below:

[Chemical Formula 1]        $Li_{1+x}(Ni_aCo_bMn_cM_d)O_2$

wherein, in Formula 1,

M is one or more selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and
$-0.4 \leq x \leq 0.4$, $0.30 \leq a \leq 1$, $0 \leq b \leq 0.70$, $0 \leq c \leq 0.70$, $0 \leq d \leq 0.10$, and $a+b+c+d=1$.

8. The electrode assembly of claim 1, wherein the electrode assembly is a stack-type electrode assembly.

9. A secondary battery comprising:

the electrode assembly according to claim 1;
an electrolyte; and
a battery case accommodating the electrode assembly and the electrolyte.

10. The secondary battery of claim 9,

wherein the battery case comprises a barrier layer, a substrate layer formed on one surface of the barrier layer, and a sealant layer formed on the other surface of the barrier layer,
the battery case is a pouch comprising at least one cup part curved in one direction, and
the electrode assembly and the electrolyte are accommodated in the at least one cup part.

[FIG. 1]

[FIG. 2]

## INTERNATIONAL SEARCH REPORT

| International application No. |
| --- |
| **PCT/KR2025/095093** |

### A. CLASSIFICATION OF SUBJECT MATTER

**H01M 10/0585**(2010.01)i; **H01M 4/131**(2010.01)i; **H01M 4/525**(2010.01)i; **H01M 4/505**(2010.01)i; **H01M 10/052**(2010.01)i; **H01M 10/04**(2006.01)i; **H01M 50/105**(2021.01)i; **H01M 10/42**(2006.01)i; **H01M 4/02**(2006.01)i

According to International Patent Classification (IPC) or to both national classification and IPC

### B. FIELDS SEARCHED

Minimum documentation searched (classification system followed by classification symbols)

H01M 10/0585(2010.01); H01M 10/04(2006.01); H01M 10/058(2010.01); H01M 2/02(2006.01); H01M 2/08(2006.01); H01M 4/485(2010.01); H01M 50/10(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전극 조립체 (electrode assembly), 분리막 (separator), 두께 (thickness), 길이 (length), 폭 (width)

### C. DOCUMENTS CONSIDERED TO BE RELEVANT

| Category* | Citation of document, with indication, where appropriate, of the relevant passages | Relevant to claim No. |
| --- | --- | --- |
| A | KR 10-2014-0145926 A (SAMSUNG SDI CO., LTD.) 24 December 2014 (2014-12-24)<br>See claims 1, 2 and 9; and paragraph [0061]. | 1-10 |
| A | KR 10-2021-0048834 A (LG CHEM, LTD.) 04 May 2021 (2021-05-04)<br>See claims 1 and 10. | 1-10 |
| A | KR 10-2014-0049654 A (LG CHEM, LTD.) 28 April 2014 (2014-04-28)<br>See abstract; and claims 1 and 3. | 1-10 |
| A | KR 10-2014-0111209 A (LG CHEM, LTD.) 18 September 2014 (2014-09-18)<br>See abstract; and claim 1. | 1-10 |
| A | KR 10-2013-0117348 A (LG CHEM, LTD.) 25 October 2013 (2013-10-25)<br>See abstract; and claim 1. | 1-10 |

☐ Further documents are listed in the continuation of Box C.　　☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **30 June 2025** | **30 June 2025** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

EP 4 765 299 A1

| Patent document cited in search report | | | Publication date (day/month/year) | Patent family member(s) | | | Publication date (day/month/year) |
|---|---|---|---|---|---|---|---|
| KR | 10-2014-0145926 | A | 24 December 2014 | CN | 104241554 | A | 24 December 2014 |
| | | | | EP | 2814080 | A1 | 17 December 2014 |
| | | | | JP | 2015-002173 | A | 05 January 2015 |
| | | | | US | 2014-0370347 | A1 | 18 December 2014 |
| KR | 10-2021-0048834 | A | 04 May 2021 | KR | 10-2809160 | B1 | 16 May 2025 |
| KR | 10-2014-0049654 | A | 28 April 2014 | KR | 10-1539236 | B1 | 24 July 2015 |
| KR | 10-2014-0111209 | A | 18 September 2014 | CN | 104885284 | A | 02 September 2015 |
| | | | | CN | 104885284 | B | 25 August 2017 |
| | | | | EP | 2933865 | A1 | 21 October 2015 |
| | | | | EP | 2933865 | B1 | 11 January 2017 |
| | | | | JP | 2016-506027 | A | 25 February 2016 |
| | | | | JP | 6224124 | B2 | 01 November 2017 |
| | | | | KR | 10-1507013 | B1 | 30 March 2015 |
| | | | | US | 2014-0255756 | A1 | 11 September 2014 |
| | | | | US | 9954203 | B2 | 24 April 2018 |
| | | | | WO | 2014-137018 | A1 | 12 September 2014 |
| KR | 10-2013-0117348 | A | 25 October 2013 | KR | 10-1483205 | B1 | 16 January 2015 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240044979